# EUROPÄISCHE PATENTSCHRIFT

(11) **EP 4 115 105 B1**
(45) Veröffentlichungstag und Bekanntmachung des Hinweises auf die Patenterteilung: **27.03.2024**
(21) Anmeldenummer: 21707952.4
(22) Anmeldetag: 23.02.2021
(51) Int. Cl.: F16K 35/02, F16K 35/10, F16K 1/22, F16K 31/60, F16K 35/06

(54) **VENTIL**
VALVE
SOUPAPE

(30) Priorität: 07.03.2020 DE 102020001485
(43) Veröffentlichungstag der Anmeldung: 11.01.2023
(73) Patentinhaber: GEA Tuchenhagen GmbH, 21514 Büchen (DE)
(72) Erfinder: BURMESTER, Jens, 23883 Grambek (DE); PIEPLOW, Jörg, 23919 Rondeshagen (DE); VOLSTER, Kai, 23966 Wismar (DE); ENNS, Alexander, 21493 Schwarzenbek (DE); WALDEMANN, Nils, 19258 Nostorf (DE)
(74) Vertreter: Hauck Patentanwaltspartnerschaft mbB
(86) Internationale Anmeldenummer: PCT/EP2021/054405
(87) Internationale Veröffentlichungsnummer: WO 2021/180458

(56) Entgegenhaltungen:
- US-A- 5 236 172

## Beschreibung

Ventile der gattungsgemäßen Art werden in Anlagen zur Herstellung von Lebensmitteln, Getränken, Medikamenten und feinchemischen Produkten sowie in der Biotechnologie eingesetzt.

Während der Wartung solcher Anlagen ist es wichtig, wenigstens Teile von ihr in einen definierten Zustand zu bringen und sicher in diesem zu halten. Beispielsweise kann es notwendig sein, ein Rohrstück mit einem Gerät auszutauschen und dieses Rohrstück aus der Anlage zu entfernen. Damit das Rohrstück entfernt werden kann, wird davor und dahinter ein Ventil abgesperrt. Solange das Rohrstück entfernt ist, ist Sorge dafür zu tragen, dass die Ventile abgesperrt bleiben, da sonst Kontamination der Anlage und/oder Verlust von Produkt droht.

Die WO 2011/123128 A1 stellt ein Ventil zum Steuern von Gasströmen vor. Ein Schließglied ist an einer Ventilstange befestigt, welche eine drehbar in einem Gehäuse gelagerten Hülse durchsetzt. An der Hülse ist ein Handrad befestigt. Eine Drehung des Handrades bewirkt eine Drehung der Hülse. Diese Drehung wird mittels Gewinde an Ventilstange und Hülse in eine axiale Bewegung der Ventilstange übersetzt. Die Ventilstange ragt aus dem Handrad und besitzt eine Querbohrung zur Aufnahme eines Bügels eines Bügelschlosses. Hierdurch ist das Ventil in einer Offenstellung des Schließgliedes blockierbar.

Die WO 2000/022327 A1 schlägt ein handbetriebenes Ventil vor, dessen Ventilstange mit Hilfe eines Handrades in eine axiale Richtung verstellbar ist. Diese Verstellung kann durch eine Bügelschloss blockiert werden, dessen Bügel durch ein Loch im Handrad gesteckt wird.

Ein Scheibenventil mit einer Handhebelverstellung des Schließgliedes stellt die DE 10 2013 005 458 A1 vor. Es wird ein nachrüstbares Bauteil vorgeschlagen, welches den Teil des Ventils umgibt, an dem der Handhebel mit der Ventilstange verbunden ist. Das Bauteil besitzt wenigstens eine Öffnung, durch die ein Bügel eines Bügelschlosses gesteckt werden kann. Durchsetzt der Handhebel den Bügel des auf diese Weise am Bauteil montierten Bügelschlosses, ist das Ventil gegen Verstellung des Schließgliedes gesichert.

Aus US 5 236 172 A ist ein Ventil bekannt mit einer Sperrvorrichtung zum Sperren des Ventils. Die Sperrvorrichtung umfasst ein Gehäuse mit mindestens einer Bohrung und einer in dem Gehäuse angeordneten Spindel mit einem Paar von Querbohrungen sowie einen Sperrstift, der wahlweise in die Gehäusebohrung und eine der Spindelbohrungen einsetzbar ist, um eine Drehung der Spindel relativ zu dem Gehäuse in einer ersten oder zweiten Position zu sperren. Dabei soll ein bestehendes Ventil mit der Sperrvorrichtung nachrüstbar sein.

Es war nun daher Aufgabe der Erfindung, ein Ventil zu schaffen, welches kostengünstig mit erhöhter Sicherheit in einer Position festgelegt werden kann.

Diese Aufgabe wird gelöst durch ein Ventil mit den Merkmalen des Anspruchs 1. Die abhängigen Ansprüche geben vorteilhafte Weiterbildungen an.

Das Ventil besitzt ein Schließglied, welches durch eine Drehbewegung um eine quer zu einer Durchströmungsrichtung stehenden Drehachse von einer Schließstellung in eine Offenstellung bringbar ist. Das Schließglied kann als Scheibe geformt sein. Ein Ventil dieser Ventilart wird auch Scheibenventil genannt und umfasst eine Welle, die mit dem Schließglied verbunden ist und die ein Wellenende umfasst. Kostengünstig und hygienisch sind solche Ventile, bei denen Schließglied und Welle als ein Teil hergestellt sind, beispielsweise durch Anwendung eines Schmiedeverfahren. Das Ventil umfasst weiterhin ein Ventilgehäuse, eine Verstellvorrichtung, welche ein Verstellvorrichtungsgehäuse aufweist und eine Aufnahme umfasst, in welcher das Wellenende aufnehmbar ist.

Es wird vorgeschlagen, eine mit einem Schließglied mittelbar oder unmittelbar verbundene Welle direkt zu blockieren.

Hierzu ist vorgesehen, dass ein Wellenabschnitt einen Durchlass umfasst, welcher mit zwei gehäuseseitigen Öffnungen in Deckung bringbar ist, und Durchlass und Öffnungen von einem Sicherungskörper durchsetzbar sind, und die Verbindung von Welle und Wellenabschnitt gegen Lösen gesichert ist, wenn Durchlass und Öffnungen sich in Deckung befinden. "Gehäuseseitig" meint eine Anordnung an einem stehenden Teil des Ventils oder einer daran angebrachten Komponente. Im Falle der Verstellvorrichtung ist es das Verstellvorrichtungsgehäuse. "Öffnungen" können gebohrte Durchgangslöcher oder u-förmige Aussparungen sein. Die zu erfüllende Funktion ist die Festlegung des Sicherungskörpers gegen Drehbewegung um die Drehachse.

Die Blockierung der Bewegung des Schließgliedes erfolgt auf die vorgestellte Weise nahe der Drehachse und nicht wie im Stand der Technik radial zu ihr versetzt. Die Gefahr einer Fehlbedienung oder Umgehung der Blockierung wird auf diese Weise sehr stark verringert. Die Anordnung ist kostengünstig und kann nachrüstbar ausgeführt werden.

Erfindungsgemäß wird eine baulich einfache und kostengünstige Nachrüstbarkeit erreicht, indem ein Zwischengehäuse zwischen Verstellvorrichtung und Ventil angeordnet wird und eine Zwischenwelle aufweist, die mit der Stellwelle der Verstellvorrichtung und der Welle des Ventils gekoppelt wird. Die Zwischenwelle übernimmt dann die Funktion des Wellenabschnitts.

Erfindungsgemäß wird die Sicherheit der Anordnung gegen unbeabsichtigte Betätigung des Ventils dadurch erhöht, dass die Welle und Zwischenwelle mit einer Schraubverbindung gesichert werden, wobei eine Abdeckung die Schraube insbesondere dann verdeckt, wenn sich das Ventil in der zu blockierenden Schaltstellung befindet. Die Schraube ist dann nicht mehr zugänglich, Welle und Zwischenwelle sind zuverlässig miteinander verbunden. Die Festlegung des Schließglieds ist nicht mehr lösbar.

Eine vorteilhaft sichere und für die Kraftübertragung während der Ventilbetätigung gut geeignete Weiterbildung sieht vor, das Wellenende in einer zweiten Aufnahme an der Zwischenwelle aufzunehmen, wobei Aufnahme und zweite Aufnahme geometrisch ähnlich zueinander geformt sind. Dies ermöglicht zudem, die Anordnung mit dem Zwischengehäuse und der Zwischenwelle nachrüstbar auszuführen. Die Komponente mit Zwischenwelle, die die LoTo-Funktion enthält, wird nur zwischen Ventil und Verstellvorrichtung eingesetzt, wobei durch die geometrische Ähnlichkeit eine funktionserhaltende Kopplung von Welle, Zwischenwelle und Stellwelle bewirkt. Nach einer kostengünstigen, technisch einfachen und durch den Einsatz weniger Komponenten gegen Fehlbedienung sichere Ausführung sieht vor, einen Abschnitt eines Bügels eine Bügelschlosses, beispielsweise Vorhängeschlosses, als Sicherungskörper zu benutzen.

In einer anderen Aufführung wird ein Bolzen als Sicherungskörper benutzt. Er besitzt einen Kopf, welcher größer als das Loch des Durchlasses ist, so dass der Sicherungskörper in einer ersten Richtung formschlüssig festgelegt ist. In der anderen Richtung erfolgt die Festlegung beispielsweise durch ein Bügelschloss, welches durch eine Querbohrung des Sicherungskörpers gesteckt wird, wobei diese Querbohrung auf der dem Kopf gegenüberliegenden Seite von Verstellvorrichtung oder Zwischengehäuse angeordnet ist. Solch ein Bolzen ist für große Ventilgröße von Vorteil, da Bügelschlösser nicht in beliebigen Abmessungen erhältlich sind. Zudem ist es für den Bauraumbedarf vorteilhaft, da ein Bolzen in engen Raumverhältnissen leichter als ein Langbügelschloss einsetzbar ist.

Eine zusätzliche Sicherheit im normalen Betrieb und bei der Festlegung in einer Wunschstellung bietet eine Ausführung, gemäß der Formschlusselemente an Verstellvorrichtungsgehäuse und Zwischengehäuse vorgesehen sind, welche durch einen Formschluss Verstellvorrichtungsgehäuse, Zwischengehäuse und Ventil gegen ein gegenseitiges Verdrehen sichern. Auf diese Weise wird verhindert, dass das Schließglied durch Verdrehung des Zwischengehäuses verstellt wird.

Die vorgestellten Ausführungen wirken vorteilhaft sicher mit Verstellvorrichtungen zusammen, die einen Handhebel zur manuellen Betätigung des Ventils umfassen. Auch mit pneumatischen Verstellvorrichtungen können die Ausführungen benutzt werden.

Anhand von Ausführungsbeispielen und deren Weiterbildungen sollen die Erfindung näher erläutert und die Darstellung der Wirkungen und Vorteile vertieft werden.

Es zeigen:
- **Fig. 1:**: Schnitt durch ein Ventil gemäß erstem Beispiel in Offenstellung;
- **Fig. 2:**: Schnitt durch ein Ventil gemäß einer erfindungsgemäßen Weiterbildung;
- **Fig. 3:**: Teilschnitt A durch das Ventil gemäß Fig. 2;
- **Fig. 4:**: Perspektivischer Anblick des Zwischengehäuses.

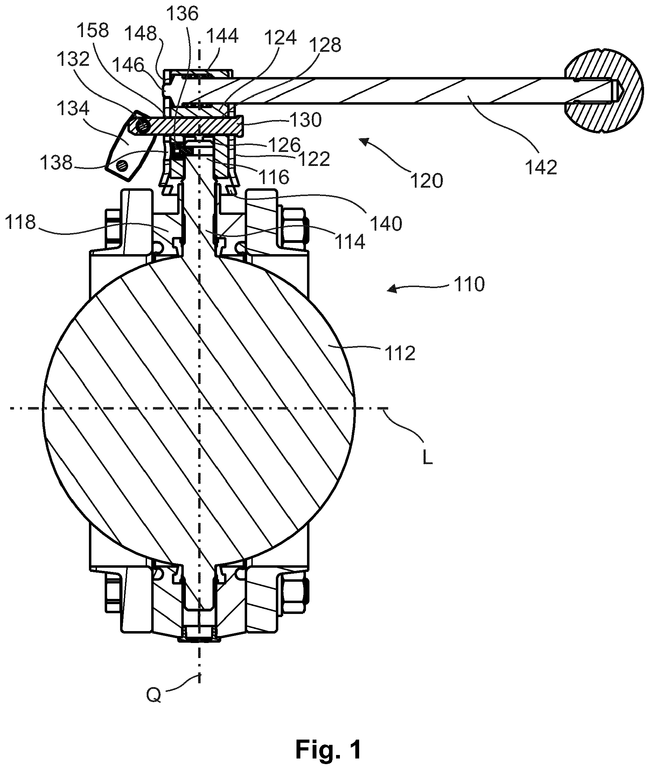

Das Beispiel gemäß **Fig. 1** zeigt ein Ventil 110 mit einem Schließglied 112, welches durch eine Drehbewegung um eine quer zu einer Durchströmungsrichtung L stehenden Drehachse Q von einer Schließstellung in eine Offenstellung bringbar ist, mit einer Welle 114, die mit dem Schließglied verbunden ist und die ein Wellenende 116 umfasst, mit einem Ventilgehäuse 118, mit einer Verstellvorrichtung 120, die ein Verstellvorrichtungsgehäuse 122 und eine Stellwelle 124 mit einer Aufnahme 126 aufweist, in welcher das Wellenende 116 aufnehmbar ist, und dadurch gekennzeichnet ist, dass die Stellwelle 124 einen Durchlass 128 umfasst, welcher mit zwei Löchern im Verstellvorrichtungsgehäuse 122 in Deckung bringbar ist, Durchlass und Löcher von einem Sicherungskörper 130 durchsetzbar sind, und die Drehachse Q den Sicherungskörper 130 schneidet.

Die Stellwelle 124 bildet einen Wellenabschnitt, der den Durchlass 128 umfasst, welcher mit zwei gehäuseseitigen Öffnungen in Deckung bringbar ist, und Durchlass 128 und Öffnungen 158 von einem Sicherungskörper 130 durchsetzbar sind, und die Verbindung von Welle und Wellenabschnitt gegen Lösen gesichert ist, wenn Durchlass 128 und Öffnungen 158 sich in Deckung befinden.

Der Sicherungskörper 130 kann ein Bügel eines Bügelschlosses sein. Da dies bei großen Ventilen ein spezielles Bügelschloss erfordert, ist es vorteilhaft, den Sicherungskörper 130 als eigenständiges Bauteil auszuführen und mit einem Loch zu versehen, welches den Bügel 132 eines standardmäßigen Bügelschlosses 134 aufnimmt.

Das in der Aufnahme 126 der Stellwelle 124 aufgenommene Wellenende 116 kann durch eine formschlüssige Gestaltung von Aufnahme 126 und Wellenende 116 gegen eine Verdrehung gegeneinander gesichert sein. Eine Schraube 136 sichert diese Verbindung von Stellwelle 124 und Wellenende 116 gegen Bewegung in Richtung der Querachse Q. Die Schraube 136 ist über eine Öffnung 138 im Verstellvorrichtungsgehäuse 122 zugänglich.

Um die von Sicherungskörper 130 und Bügelschloss 134 bewirkte Festlegung des Schließgliedes 112 in einer Position zusätzlich zu sichern, kann eine Abdeckung der Öffnung 138 vorgesehen sein. Diese Abdeckung ist vorteilhaft durch das Bügelschloss 134 fixiert. Alternativ oder zusätzlich kann sie unlösbar mit dem Sicherungskörper 130 verbunden sein, beispielsweise durch einen Stoffschluss. Die Abdeckung kann beispielsweise als Schalenabschnitt (Halbschale oder dergleichen) ausgeführt sein, die sich an eine Auswand des Verstellvorrichtungsgehäuses 122 anschmiegt.

Das Verstellvorrichtungsgehäuse 122 weist wenigstens ein Formschlusselement 140 auf, welches im Eingriff mit dem Ventilgehäuse 118 steht und eine Verdrehung des Verstellvorrichtungsgehäuses 122 gegen das Ventilgehäuses 118 verhindert.

Die Verstellvorrichtung 120 weist einen Handhebel 142 auf, welcher in einer radialen Richtung quer zur Querachse Q gegen die Kraft einer Feder 144 bewegbar ist. Mit dieser Bewegung wird eine Nase 146 aus einer Arretieraufnahme 148 am Verstellvorrichtungsgehäuse 122 entnommen. Nur wenn die Nase 146 aus der Arretieraufnahme 148 entfernt ist, ist eine Drehung der Stellwelle 124 um die Querachse Q möglich. Ist die Nase 146 in der Arretieraufnahme 148 aufgenommen, ist die Stellwelle 124 gegen eine Verdrehung um die Querachse Q gesichert.

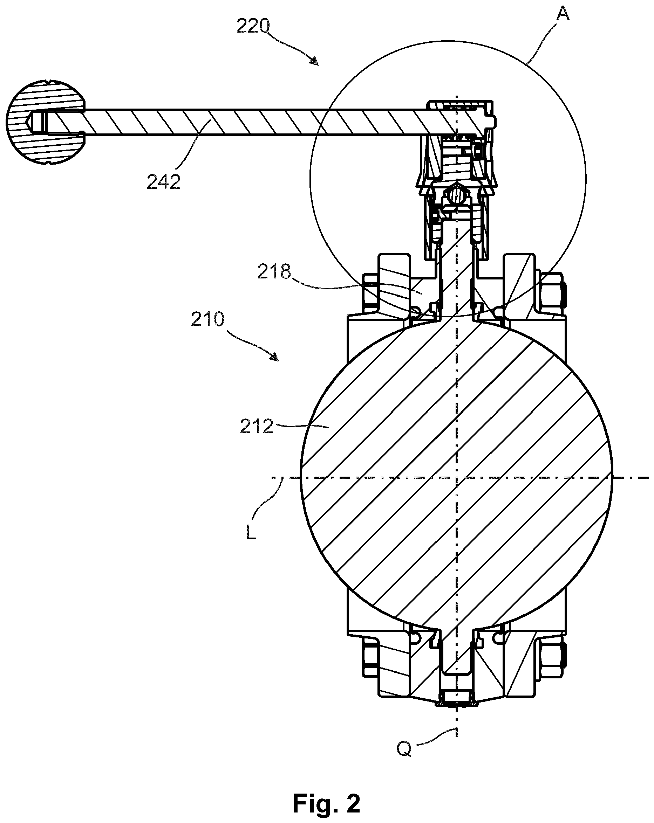

Die **Fig. 2****,** **Fig. 3** und **Fig. 4** zeigen eine erfindungsgemäße Weiterbildung des beschriebenen Ventils.

In **Fig. 2** ist ein Schnitt durch ein Ventil 210 mit einem als Scheibe ausgebildeten Schließglied 212 gezeigt. Das Schließglied 212 ist um eine Querachse Q drehbar in einem Ventilgehäuse 218 gelagert. Die Querachse Q steht quer zur Strömungsrichtung L, entlang der das Ventilgehäuse 218 durchströmbar ist, beispielsweise in einem rechten Winkel. Die Drehung des Schließgliedes 212 um die Querachse Q ist mit Hilfe einer Verstellvorrichtung 220 bewirkbar. Diese kann einen Handhebel 242 aufweisen.

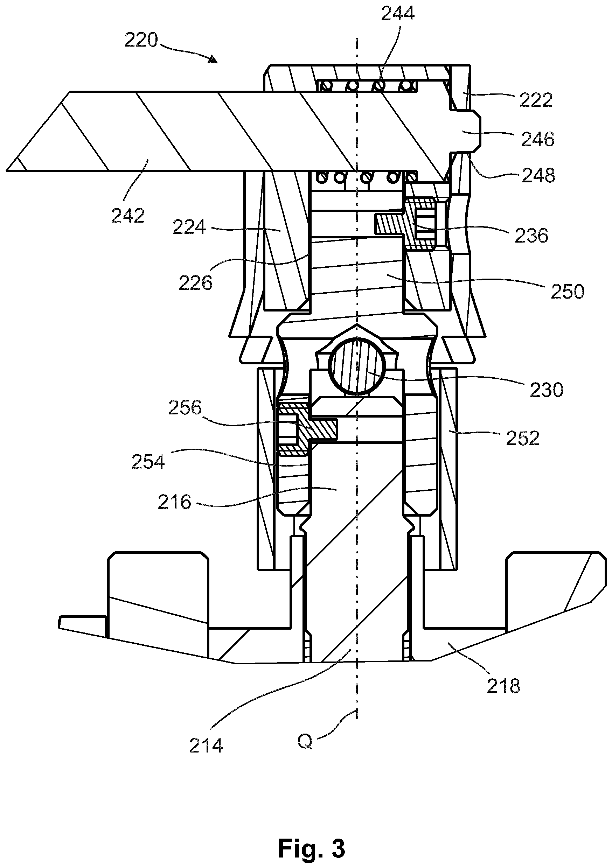

Der Ausschnitt A aus **Fig. 2** ist in **Fig. 3** dargestellt. In dieser Weiterbildung weist die Verstellvorrichtung 220 ebenfalls einen in einem Verstellvorrichtungsgehäuse 222 gehalterten Handhebel 242 auf. Der Handhebel 242 ist relativ zum Verstellvorrichtungsgehäuse 222 gegen die Kraft einer Feder 244 bewegbar, um eine Nase 246, die an einem seiner Enden vorgesehen ist, aus einer Arretieraufnahme 248 heraus zu bewegen. Wenn die Nase 246 in der Arretieraufnahme 248 aufgenommen ist, ist der Handhebel 242 nicht in einer Umfangsrichtung um die Querachse Q bewegbar. Wenn die Nase 246 aus der Arretieraufnahme 248 herausgezogen ist, ist diese Bewegung in Umfangsrichtung möglich. Diese Bewegung bewirkt eine Drehung der Stellwelle 224 um die Querachse Q.

Die Drehung der Stellwelle 224 wird auf eine mit ihr verbundene und einen Wellenabschnitt bildende Zwischenwelle 250 übertragen, welche abschnittsweise in einer Aufnahme 226 aufgenommen ist. Aufnahme 226 und der darin aufgenommene Abschnitt der Zwischenwelle 250 sind kraftübertragend gestaltet, beispielsweise indem sie einen Formschluss in Umfangsrichtung um die Querachse Q bilden. Dieser Formschluss kann ersetzt oder unterstützt sein mit einer Schraube 236.

Die Zwischenwelle 250 ist drehbar in einem Zwischengehäuse 252 aufgenommen, welches sich drehfest am Ventilgehäuse 218 abstützt. Die Zwischenwelle 250 weist eine zweite Aufnahme 254 auf, in welcher das mit dem Schließglied verbundene Wellenende 216 drehfest aufgenommen ist. Durch diese Anordnung wird eine mit dem Handhebel 242 eingeleitete Drehung der Stellwelle 224 um die Querachse Q in eine Drehung der Welle 214 umgesetzt und das Ventil 210 von einer geschlossenen in eine geöffnete Stellung und umgekehrt gebracht.

Die Verbindung von Zwischenwelle 250 und Welle 214 kann vorteilhaft gesichert sein, beispielsweise mit einer zweiten Schraube 256. Diese durchsetzt eine Öffnung in der zweiten Aufnahme 254 und steht im Eingriff mit einem Gewinde im Wellenende 216, so dass wenigstens ein Formschluss gegen Bewegung entlang der Querachse Q geschaffen ist.

Vorteilhaft ist es, die zweite Schraube 256 in wenigstens einer Winkelstellung der Zwischenwelle 250 durch das Zwischengehäuse 252 abgedeckt anzuordnen. Bevorzugt handelt es sich um die Winkelstellung, in der das Ventil gesichert sein soll. Damit wird ein Entfernen der zweiten Schraube 256 verhindert und das Ventil noch sicherer in seiner Stellung fixiert.

Die Zwischenwelle 250 ist gegen eine Drehung um die Querachse Q blockierbar, indem ein Sicherungskörper 230 Öffnungen und/oder Ausnehmungen in der Zwischenwelle 250 und im Zwischengehäuse 252 durchsetzt. Der Sicherungskörper 230 kann wiederum durch ein Bügelschloss gegen Entnahme gesichert sein. Die Zwischenwelle 250 kann mehr als eine Öffnung oder Ausnehmung aufweisen, die winkelversetzt zueinander angeordnet sind, so dass das Ventil jeweils in einer von mehreren Stellungen fixierbar ist.

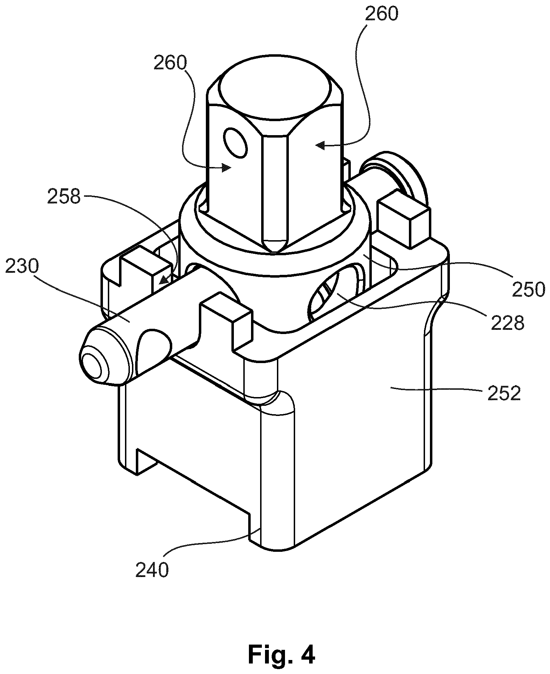

In **Fig. 4** ist das Zwischengehäuse 252 in einer perspektivischen Darstellung gezeigt. Ein Durchlass 228 zur Aufnahme des Sicherungskörpers 230 ist in dieser Darstellung leichter zu erkennen. Durch Drehung der Zwischenwelle 250 ist der Durchlass 228 Öffnungen 258 auf eine Linie bringbar, so dass der Sicherungskörper 230 Durchlass 228 und Öffnung 258 durchsetzt. Dadurch wird eine weitere Drehung der Zwischenwelle 250 blockiert. Die Öffnung kann ein Loch, eine Bohrung oder eine Ausnehmung sein. In Fig, 4 ist außerdem ein Formschlusselement 240 zu sehen, welches eine Sicherung der Abstützung des Zwischengehäuses 252 auf dem Ventilgehäuse 218 gegen die Verdrehung um die Querachse Q bewirkt. Die Zwischenwelle 250 weist ebene Flächen 260 auf. Durch die ebenen Flächen 260 entsteht ein Mehrflach, das mit einem korrespondierenden Mehrflach in der Aufnahme 226 zusammenwirkt, so dass die Zwischenwelle 250 in der Aufnahme 226 formschlüssig aufgenommen ist.

Ein zusätzlicher Vorteil des anhand der **Fig. 2** bis **Fig. 4** erläuterten Ausführungsbeispiels ist, dass das Zwischengehäuse 252 und Zwischenwelle 250 an bestehenden Ventilen nachrüstbar sind. Dieser Vorteil wird vertieft, indem Aufnahme 226 und zweite Aufnahme 254 geometrisch ähnlich zueinander geformt sind.

Dieses Beispiel beschreibt also ein Ventil 210 mit einem Schließglied 212, welches durch eine Drehbewegung um eine quer zu einer Durchströmungsrichtung L stehenden Drehachse Q von einer Schließstellung in eine Offenstellung bringbar ist, mit einer Welle 214, die mit dem Schließglied 212 verbunden ist und die ein Wellenende 216 umfasst, mit einem Ventilgehäuse 218, mit einer Verstellvorrichtung 220, die ein Verstellvorrichtungsgehäuse 222 aufweist und eine Aufnahme 226 umfasst, in welcher das Wellenende 216 aufnehmbar ist, und mit einem Zwischengehäuse 252 mit einer darin drehbar aufgenommenen Zwischenwelle 250, welche mit der Welle 214 verbunden und in der Aufnahme 226 aufgenommen ist. Dieses Ventil 210 ist dadurch gekennzeichnet, dass die Zwischenwelle 250 einen Durchlass 228 umfasst, welcher mit zwei Öffnungen 258 im Zwischengehäuse in Deckung bringbar ist, und Durchlass 228 und Öffnungen 258 von einem Sicherungskörper 230 durchsetzbar sind, und die Verbindung von Welle 214 und Zwischenwelle 250 gegen Lösen gesichert ist, wenn Durchlass 228 und Öffnungen 258 sich in Deckung befinden.

Das Ausführungsbeispiel nach den **Fig. 2****,** **3** und **4** ist mit einer Verstellvorrichtung gezeigt, die manuell betätigbar ist. Die Verstellvorrichtung kann jedoch auch druckmittelbetrieben, beispielsweise pneumatisch, ausgeführt sein. In einer solchen Ausführung ist es sinnvoll, die Verbindungen zwischen Verstellvorrichtung und Zwischengehäuse sowie zwischen Zwischengehäuse und Ventilgehäuse gesichert zu gestalten. Dies kann beispielsweise mit Hilfe von Schrauben geschehen, die einen Flansch an einem ersten Bauteil, beispielsweise Verstellvorrichtungsgehäuse und Zwischengehäuse, durchsetzen und in Gewinden im jeweils zugeordneten anderen Bauteil, beispielsweise Zwischengehäuse und Ventilgehäuse, aufgenommen sind. Die Zahl der Schrauben in der jeweiligen Verbindung hängt unter anderem von der Ventilgröße und den über die Welle zwischen Verstellvorrichtung und Schließglied übertragenen Kräften und Drehmomenten ab.

Ein besonderer Vorteil der vorgestellten Ausführungsbeispiele ist es, die Fixierung des Ventils in einer Stellung nicht durch Festlegung eines Bedienelements der Verstellvorrichtung wie den Handhebel oder ein Handrad zu bewirken, sondern möglichst direkt die Welle des Ventils oder eine damit verbundene Welle zu blockieren.

### Bezugszeichenliste

- 110; 210: Ventil
- 112; 212: Schließglied
- 114; 214: Welle
- 116; 216: Wellenende
- 118; 218: Ventilgehäuse
- 120; 220: Verstellvorrichtung
- 122; 222: Verstellvorrichtungsgehäuse
- 124; 224: Stellwelle
- 126; 226: Aufnahme
- 128; 228: Durchlass
- 130; 230: Sicherungskörper
- 132: Bügel
- 134: Bügelschloss
- 136; 236: Schraube
- 138: Öffnung
- 140; 240: Formschlusselement
- 142; 242: Handhebel
- 144; 244: Feder
- 146; 246: Nase
- 148; 248: Arretieraufnahme
- 250: Zwischenwelle
- 252: Zwischengehäuse
- 254: zweite Aufnahme
- 256: zweite Schraube
- 158; 258: Öffnung für Sicherungskörper
- 260: ebene Fläche

- L: Strömungsrichtung
- Q: Querachse

## Patentansprüche

1. Ventil (110; 210) mit einem Schließglied (112; 212), welches durch eine Drehbewegung um eine quer zu einer Durchströmungsrichtung (L) stehenden Drehachse (Q) von einer Schließstellung in eine Offenstellung bringbar ist, mit einer Welle (114; 214), die mit dem Schließglied (112; 212) verbunden ist und die ein Wellenende (116; 216) umfasst, mit einem Ventilgehäuse (118; 218), mit einer Verstellvorrichtung (120; 220), die ein Verstellvorrichtungsgehäuse (122; 222) aufweist und eine Aufnahme (126; 226) umfasst, in welcher das Wellenende (116; 216) aufnehmbar ist, **wobei** ein Wellenabschnitt einen Durchlass (128; 228) umfasst, welcher mit zwei gehäuseseitigen Öffnungen (158; 258) in Deckung bringbar ist, und Durchlass (128; 228) und Öffnungen (158; 258) von einem Sicherungskörper (130; 230) durchsetzbar sind, und eine Verbindung von Welle (114; 214) und Wellenabschnitt gegen Lösen gesichert ist, wenn Durchlass (128; 228) und Öffnungen (158, 258) sich in Deckung befinden, wobei ein Zwischengehäuse (252) mit einer darin drehbar aufgenommenen Zwischenwelle (250) vorgesehen ist, welche mit der Welle (214) verbunden und in der Aufnahme (226) aufgenommen ist, und welche den Wellenabschnitt mit dem Durchlass (228) umfasst, und die zwei Öffnungen (258) im Zwischengehäuse (252) ausgebildet sind, **dadurch gekennzeichnet, dass** eine Schraube (256) eine Öffnung der Zwischenwelle (250) durchsetzt und mit der Welle (214) in Eingriff steht, und die Schraube (256) durch das Zwischengehäuse (252) zur Sicherung gegen Lösen abdeckbar ist.

2. Ventil nach Anspruch 1, **dadurch gekennzeichnet, dass** die Zwischenwelle (250) eine zweite Aufnahme (254) umfasst, in welcher das Wellenende (216) aufnehmbar ist und welche geometrisch ähnlich der Aufnahme (226) geformt ist.

3. Ventil nach einem der Ansprüche 1 oder 2, **dadurch gekennzeichnet, dass** der Sicherungskörper (130; 230) ein Abschnitt eines Bügels eines Bügelschlosses (134) ist.

4. Ventil nach einem der Ansprüche 1 oder 2, **dadurch gekennzeichnet, dass** es den Sicherungskörper (130; 230) umfasst und der Sicherungskörper (130; 230) einen Bolzen mit einem Kopf, welcher größer als der Durchlass (128; 228) ist, und eine Bohrung zur Aufnahme eine Schlossbügels umfasst.

5. Ventil nach einem der vorhergehenden Ansprüche, **dadurch gekennzeichnet, dass** die Verstellvorrichtung (120; 220) einen Handhebel (142; 242) umfasst, mit welchem die Drehbewegung bewirkbar ist.

6. Ventil nach Anspruch 5, **dadurch gekennzeichnet, dass** Formschlusselemente (240) an Verstellvorrichtungsgehäuse (222) und Zwischengehäuse (252) vorgesehen sind, welche durch einen Formschluss Verstellvorrichtungsgehäuse (222), Zwischengehäuse (252) und Ventil (210) gegen ein gegenseitiges Verdrehen sichern.

7. Ventil nach einem der Ansprüche 1 bis 4, **dadurch gekennzeichnet, dass** die Verstellvorrichtung (120; 220) einen druckmittelbetätigten Kolben umfasst.

8. Ventil nach einem der vorhergehenden Ansprüche, **dadurch gekennzeichnet, dass** das Schließglied (112; 212) eine Scheibe umfasst.

## Claims

1. A valve (110; 210) having a closing member (112; 212) which can be brought from a closed position into an open position by a rotational movement about an axis of rotation (Q) which is transverse to a through-flow direction (L), having a shaft (114; 214) which is connected to the closing member (112; 212) and which comprises a shaft end (116; 216), having a valve housing (118; 218), having an adjusting device (120; 220) which has an adjusting device housing (122; 222) and comprises a receptacle (126; 226) in which the shaft end (116; 216) can be received, **wherein** a shaft portion comprises a passage (128; 228) which can be made congruent with two housing-side openings (158; 258), and the passage (128; 228) and the openings (158; 258) can be penetrated by a securing body (130; 230), and a connection between the shaft (114; 214) and the shaft portion is secured against release when the passage (128; 228) and the openings (158, 258) are congruent, wherein an intermediate housing (252) is provided with an intermediate shaft (250) which is rotatably received therein and which is connected to the shaft (214) and is received in the receptacle (226), and which comprises the shaft portion with the passage (228), and the two openings (258) are formed in the intermediate housing (252), **characterized in that** a screw (256) penetrates an opening of the intermediate shaft (250) and engages with the shaft (214), and the screw (256) can be covered by the intermediate housing (252) for securing against release.

2. The valve according to claim 1, **characterized in that** the intermediate shaft (250) comprises a second receptacle (254) in which the shaft end (216) can be received and which is formed geometrically similar to the receptacle (226).

3. The valve according to one of claims 1 or 2, **characterized in that** the securing body (130; 230) is a portion of a shackle of a shackle lock (134).

4. The valve according to one of claims 1 or 2, **characterized in that** it comprises the securing body (130; 230) and the securing body (130; 230) comprises a bolt with a head, which is larger than the passage (128; 228), and a bore for receiving a lock shackle.

5. The valve according to one of the preceding claims, **characterized in that** the adjusting device (120; 220) comprises a hand lever (142; 242) with which the rotational movement can be brought about.

6. The valve according to claim 5, **characterized in that** interlocking elements (240) are provided on the adjusting device housing (222) and the intermediate housing (252) which secure the adjusting device housing (222), the intermediate housing (252) and the valve (210) against mutual rotation by means of an interlocking connection.

7. The valve according to one of claims 1 to 4, **characterized in that** the adjusting device (120; 220) comprises a piston actuated by a pressure medium.

8. The valve according to one of the preceding claims, **characterized in that** the closing member (112; 212) comprises a disc.

## Revendications

1. Soupape (110 ; 210) dotée d'un obturateur (112 ; 212), lequel peut être amené d'une position de fermeture vers une position d'ouverture par un mouvement de rotation autour d'un axe de rotation (Q) s'étendant transversalement à une direction d'écoulement (L), avec un arbre (114 ; 214) relié à l'obturateur (112 ; 212) et comportant une extrémité d'arbre (116 ; 216), avec un boîtier de soupape (118 ; 218), avec un dispositif de réglage (120 ; 220) présentant un boîtier de dispositif de réglage (122 ; 222) et comportant un logement (126 ; 226) dans lequel l'extrémité d'arbre (116 ; 216) peut être reçue, dans laquelle une section d'arbre comporte un passage (128 ; 228) apte à être amené en alignement avec deux ouvertures côté boîtier (158 ; 258), et le passage (128 ; 228) et les ouvertures (158 ; 258) peuvent être traversés par un corps de blocage (130 ; 230), et une liaison entre l'arbre (114 ; 214) et la section d'arbre est assurée contre le détachement, lorsque le passage (128 ; 228) et les ouvertures (158 ; 258) sont alignés, dans laquelle il est prévu un boîtier intermédiaire (252) avec un arbre intermédiaire (250) reçu de façon rotative dans celui-ci, lequel est relié à l'arbre (214) et reçu dans le logement (226), et lequel comporte la section d'arbre dotée du passage (228), et les deux ouvertures (258) sont formées dans le boîtier intermédiaire (252), **caractérisée en ce qu'**une vis (256) traverse une ouverture de l'arbre intermédiaire (250) et s'engage avec l'arbre (214), et la vis (256) peut être recouverte par le boîtier intermédiaire (252) pour empêcher le desserrage.

2. Soupape selon la revendication 1, **caractérisée en ce que** l'arbre intermédiaire (250) comporte un deuxième logement (254), dans lequel l'extrémité d'arbre (216) peut être reçue et lequel est formé avec une géométrie semblable à celle du logement (226).

3. Soupape selon l'une des revendications 1 ou 2, **caractérisée en ce que** le corps de blocage (130 ; 230) est une section d'un arceau d'un cadenas (134).

4. Soupape selon l'une des revendications 1 ou 2, **caractérisée en ce que** celle-ci comporte le corps de blocage (130 ; 230) et le corps de blocage (130 ; 230) comporte un boulon doté d'une tête, laquelle est plus grande que le passage (128 ; 228), ainsi qu'un perçage destiné à recevoir un arceau de cadenas.

5. Soupape selon l'une des revendications précédentes, **caractérisée en ce que** le dispositif de réglage (120 ; 220) comporte un levier manuel (142 ; 242) permettant d'effectuer le mouvement de rotation.

6. Soupape selon la revendication 5, **caractérisée en ce que** des éléments à complémentarité de forme (240) sont prévus sur le boîtier de dispositif de réglage (222) et le boîtier intermédiaire (252), lesquels empêchent par complémentarité de forme une rotation mutuelle entre le boîtier de dispositif de réglage (222), le boîtier intermédiaire (252) et la soupape (210).

7. Soupape selon l'une des revendications 1 à 4, **caractérisée en ce que** le dispositif de réglage (120 ; 220) comporte un piston actionné par fluide sous pression.

8. Soupape selon l'une des revendications précédentes, **caractérisée en ce que** l'obturateur (112 ; 212) comporte un disque.
